(19) Europäisches Patentamt / European Patent Office / Office européen des brevets

(11) **EP 3 761 056 B1**

(12) **EUROPEAN PATENT SPECIFICATION**

(45) Date of publication and mention
of the grant of the patent:
**25.01.2023 Bulletin 2023/04**

(21) Application number: **20183091.6**

(22) Date of filing: **30.06.2020**

(51) International Patent Classification (IPC):
**G01S 7/481** *(2006.01)*

(52) Cooperative Patent Classification (CPC):
**G01S 7/4812; G01S 7/4817**

(54) **OPTICAL SCANNER, OBJECT DETECTOR, AND SENSING APPARATUS**

OPTISCHER SCANNER, OBJEKTDETEKTOR UND ABTASTVORRICHTUNG

SCANNER OPTIQUE, DÉTECTEUR D'OBJET ET APPAREIL DE DÉTECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2019 JP 2019125651**

(43) Date of publication of application:
**06.01.2021 Bulletin 2021/01**

(73) Proprietor: **Ricoh Company, Ltd.**
**Tokyo 143-8555 (JP)**

(72) Inventors:
• **NAKAMURA, Tadashi**
**Tokyo 143-8555 (JP)**
• **NAKAMURA, Kento**
**Tokyo 143-8555 (JP)**

(74) Representative: **J A Kemp LLP**
**80 Turnmill Street**
**London EC1M 5QU (GB)**

(56) References cited:
**US-A1- 2009 123 158**

• **SU ET AL: "Optical receiving solution for optical scanning lag effect of LADAR", OPTIK, WISSENSCHAFTLICHE VERLAG GMBH, DE, vol. 114, no. 5, 1 January 2003 (2003-01-01), pages 217-220, XP005256280, ISSN: 0030-4026, DOI: 10.1078/0030-4026-00255**

EP 3 761 056 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical Field

Embodiments of the present invention relate to an optical scanner, an object detector, and a sensing apparatus.

Background Art

Optical scanners that deflect laser beams to scan an irradiation field, object detectors that use the emitted laser beams to detect, for example, the presence or absence of an object or the distance to the object, and sensing apparatuses that use such object detectors are known in the art. In particular, such an apparatus or device may be referred to as a light detection and ranging (LiDAR) device or a laser imaging detection and ranging (LiDAR) device.

A LiDAR device detects, for example, the presence of an object ahead of a travelling vehicle (mobile object), or the distance between the vehicle and the object. The LiDAR device irradiates the object with the laser beams emitted from the light source, and a photodetector detects the light reflected or dispersed from the object. By so doing, for example, the presence of an object existing in a specified area, or the distance between the vehicle and the object can be detected.

Measuring apparatuses in which a light receiver receives the return light of the laser beams emitted to an object in order to measure the distance to the object are known in the art (see, for example, JP-2018-151278-A). Each of such measuring apparatuses includes a light emitting device that emits laser beams, and an optical element through which the emitted laser beams pass, where the optical element reflects the return light that passes through a predetermined area including the optical path of the laser beams, so as to be received by a light receiver. Each of such measuring apparatuses also includes a concave mirror arranged to reflect the laser beams that are emitted from the light emitting device to an optical scanner (micro-electromechanical systems (MEMS) mirror) and to concentrate the return light from the optical scanner onto the optical element.

For example, JP-2018-151278-A discloses that an optical scanner (MEMS mirror) scans laser beams and a light receiver receives the light that is reflected or scattered by an object and then is scanned again by the optical scanner. Due to this configuration, for example, the presence or absence of an object existing in a specified area or the distance to the object can be detected. As described above, a scanning LiDAR device that scans both laser beams and a detection field that can be detected by a detector can concentrate the laser beams only onto an area to be detected, and thus is advantageous in the accuracy of detection or the detection distance. Moreover, the detection field that can be detected by a detector can be minimized, and thus the size of the detector can easily be downsized. In other words, a scanning LiDAR device is advantageous in terms of cost.

Moreover, an object detector is known in the art in which the light emitted from a light source is scanned by a light deflector, and when an object exists within the scanning area of the light deflector, a light receiver receives the light that is reflected by an object and then has passed through an imaging optical system (see, for example, JP-2015-212647-A). Such a light deflector is configured by a rotating mirror that includes a pair of reflection planes that rotate on the rotation axis.

An apparatus that is provided with a light emitter, a light receiver, a controller, and a processor is known in the art, and such an apparatus obtains distance-image data indicating the distribution of the distance to an object existing within an observable range (see, for example, JP-2011-089874-A). The light emitter includes an emitting device that emits laser beams, a mirror that reflects the laser beams emitted from the emitting device, the first oscillation mechanism used to make the mirror oscillate around the first axis, and the second oscillation mechanism used to make the mirror oscillate around the second axis. The mirror is configured by a micro-electromechanical systems (MEMS) mirror.

The disclosures of JP-2018-151278-A, JP-2015-212647-A, and JP-2011-089874-A are in common with each other in the respect that a method of scanning laser beams in a desired range of angle (effective scanning area) is adopted. The optical scanner that is disclosed in JP-2018-151278-A and the mirror that is disclosed in JP-2011-089874-A are configured by a MEMS mirror, and the light deflector that is disclosed in JP-2015-212647-A is configured by a rotating mirror that includes a pair of reflection planes that rotate on the rotation axis. However, other various kinds of scanners are also known in the art.

In the known scanners according to the disclosures of, for example, JP-2018-151278-A, JP-2015-212647-A, and JP-2011-089874-A, some technical problems are known as follows. Although the light travels at the speed of light both ways between the scanner and the object, for example, the accuracy of detection may deteriorate, depending on the scanning speed of the scanner, due to the advance of the light deflector during such go and return scanning.

For example, the length of time t it takes for the emitted light to travel, at the light speed c, both ways between the light deflector and the object at the distance L is defined as follows.

$$t = 2L / c$$

When L = 300 meters (m), t = 2 μs. When it is assumed that A micro-electromechanical systems (MEMS) mirror is used, the resonance frequency is at 2000 hertz (Hz), and that the amplitude is 25 degrees (mechanical deflection angle is ±25 degrees), the scanning angular speed is maximized at the center of scanning. When t = 2 μs, the angle advances in the scanning direction by 0.6 degrees that corresponds to the deflection angle of the MEMS mirror. Regarding the optical angles of view, the angle advances in the scanning direction by 1.3 degrees that is the doubled amount of the deflection angle of the MEMS mirror. As described above, when the time it takes for the light to be emitted, reflected, and be received is 2 μs, the light is shifted due to the light emission and light reception by 1.3 degrees in the scanning direction. Depending on the setting of each one of the light-emitting field angle and the light-receptive field angle, light reception may fail due to an insufficient angle of field, and the accuracy of object detection may end up deteriorating. In extreme cases, object detection may simply fail.

Su et al.: "Optical receiving solution for optical scanning lag effect of LADAR", Optik 114, No. 5 (2003) 217-220 and US 2009/123158 disclose background art to the invention.

SUMMARY

According to the present invention there is provided an optical scanner as defined in the appended claims.

According to one aspect of the present disclosure, an optical scanner, an object detector, and a sensing apparatus can be provided where objects can be detected with a high degree of precision.

BRIEF DESCRIPTION OF THE DRAWINGS

A more complete appreciation of embodiments and the many attendant advantages thereof will be readily obtained as the same becomes better understood by reference to the following detailed description when considered in connection with the accompanying drawings.

FIG. 1 is a diagram illustrating a configuration of an optical scanner, provided for reference purposes.

FIG. 2 is a diagram illustrating a configuration of an object detector, provided for reference purposes.

FIG. 3 is a functional block diagram of an object detector that implements distance measurement using a time-of-flight (TOF) method, provided for reference purposes.

FIG. 4 is a diagram illustrating the angular-intensity distribution of the laser beams emitted from a light-emitting optical device, provided for reference purposes.

FIG. 5A and FIG. 5B are diagrams each illustrating the light-receptive field angle of a light-receptive optical device, provided for reference purposes.

FIG. 6 is a diagram illustrating the longest detection distance of an object in a detection field, provided for reference purposes.

FIG. 7 is a diagram illustrating the angle of divergence of laser beams in a detection field, provided for reference purposes.

FIG. 8 is a diagram illustrating the angle-of-view difference between the light emission and light reception when the light is deflected by a light deflector, provided for reference purposes.

FIG. 9 is a diagram illustrating the relation between the emitted laser beams and the light-receptive field angle, provided for reference purposes, which corresponds to FIG. 4.

FIG. 10 is a diagram illustrating a configuration of a sensing apparatus according to a fifth embodiment of the present disclosure.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

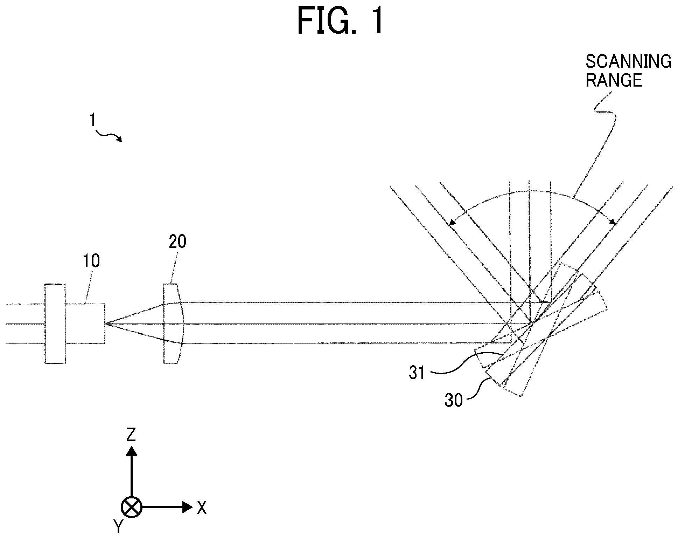

An optical scanner 1 is described below in detail with reference to FIG. 1 to FIG. 9 for reference purposes. An X-axis direction, a Y-axis direction, and a Z-axis direction in the following description are indicated by arrows depicted in the drawings. The X-axis direction, the Y-axis direction, and the Z-axis direction are orthogonal to each other and forms three-dimensional space.

FIG. 1 is a diagram illustrating a configuration of the optical scanner 1, provided for reference purposes.

The optical scanner 1 includes a light-source device 10, a light-emitting optical device 20, and a light deflector (scanning mirror) 30.

The light-source device 10 emits laser beams that diverge at a predetermined angle. For example, the light-source device 10 may be configured by a semiconductor laser (laser diode (LD)). Alternatively, the light-source device 10 may be configured by, for example, a vertical-cavity surface-emitting laser (VCSEL) or a light-emitting diode (LED). As described above, there is a degree of flexibility in how the light-source device 10 is configured, and various kinds of modification or substitution may be made.

The light-emitting optical device 20 forms the laser beams emitted from the light-source device 10. More specifically, the light-emitting optical device 20 approximately collimates the laser beams that diverge at a specific angle. As will be described later in detail, for example, the light-emitting optical device 20 may be configured by a coaxial aspherical lens that couples and approximately collimates the diverging laser beams. In FIG. 1, the light-emitting optical device 20 is illustrated as a single lens. However, no limitation is indicated thereby, and the light-emitting optical device 20 may be configured by a plurality of lenses.

A light source unit that emits laser beams is configured by the light-source device 10 and the light-emitting optical device 20.

The light deflector 30 has a deflecting surface 31 that deflects and scans the laser beams emitted from the light-emitting optical device 20. More specifically, the light deflector 30 scans and deflects the laser beams that are emitted by the light-source device 10 and the light-emitting optical device 20 in the X-axis direction to a predetermined scanning range on an XZ plane including the X-axis direction and the Z-axis direction. For example, the scanning range of the light deflector 30 is determined by changing the angle of the deflecting surface 31 due to oscillation or rotation. In FIG. 1, the reference position of the light deflector 30 (deflecting surface 31) with reference to the above scanning range is drawn by a solid line, and the scanning position (for example, both ends of the scanning) of the light deflector 30 (deflecting surface 31) with reference to the above scanning range is drawn by a broken line. As described above, the light deflector 30 deflects and scans the laser beams emitted from the light-source device 10 and the light-emitting optical device 20 (light source unit) towards an object existing in the detection field. The term "detection field" is used to include both the space between the light-emitting optical device 20 and the light deflector 30 and the area that has been deflected and scanned by the light deflector 30.

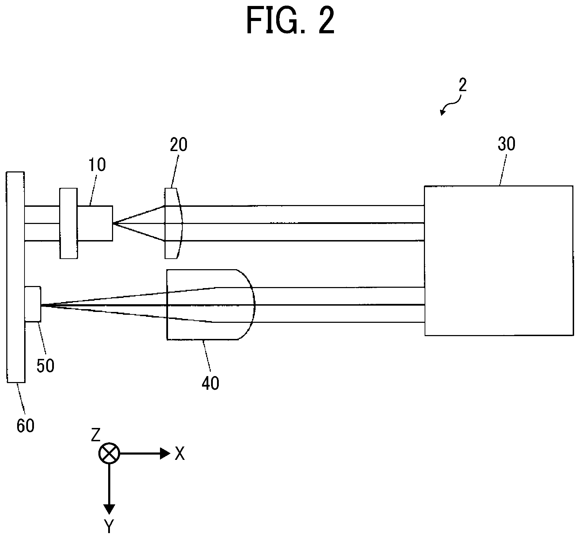

FIG. 2 is a diagram illustrating a configuration of the object detector 2, provided for reference purposes.

The object detector 2 includes a light-receptive optical system 40, a light-receptive optical device 50, and a driver board 60 in addition to the light-source device 10, the light-emitting optical device 20, and the light deflector 30 of the optical scanner 1.

When an object exists in the area that is scanned by the light deflector 30 with the laser beams, the laser beams are reflected and/or scattered by the object. The laser beams that are reflected or scattered by the object pass through the light-receptive optical system 40 and are received by the light-receptive optical device 50. In other words, the light-receptive optical device 50 receives the laser beams that are deflected and scanned by the light deflector 30 and are reflected or scattered by the object existing in the detection field. The light-receptive optical device 50 serves as an object detection device. Such an object detection device detects the laser beams that are reflected or scattered by an object existing in a detection field, and determines the timing at which the object is to be detected. The driver board 60 controls the operation of the light-source device 10 and the light-receptive optical device 50.

For example, the light-receptive optical system 40 may be any one of a lens system, a mirror system, and any other various kinds of configurations that can concentrate the light onto the light-receptive optical device 50. There is a degree of flexibility in the configuration or structure of the light-receptive optical system 40, and the configuration of the light-receptive optical system 40 is not limited any particular configuration.

The light-receptive optical device 50 may be configured by, for example, a photodiode (PD), an avalanche photodiode (APD), a single-photon avalanche diode (SPAD) that serves as a Geiger-mode APD (G-APD), a complementary metal oxide semiconductor (CMOS) imaging device (TOF sensor) that has a time-of-flight (TOF) calculation function on a pixel-by-pixel basis.

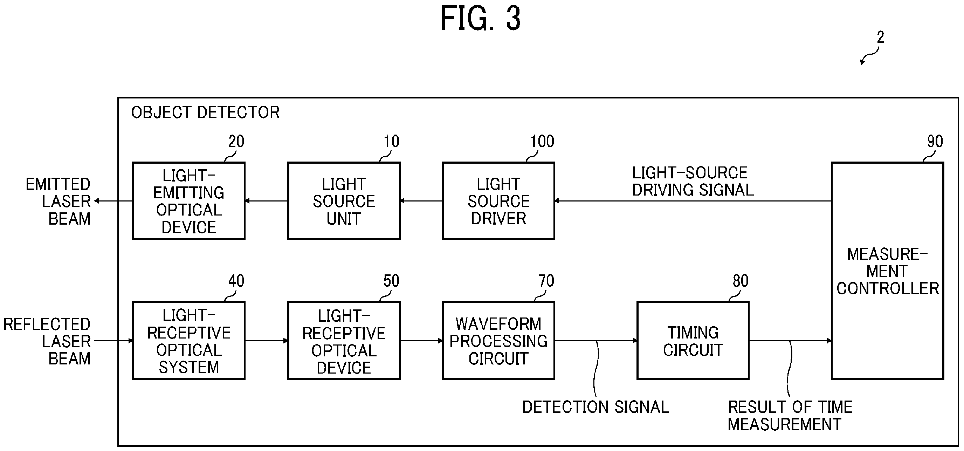

FIG. 3 is a functional block diagram of the object detector 2 that implements distance measurement using a TOF method, provided for reference purposes.

As illustrated in FIG. 3, a waveform processing circuit 70, a timing circuit 80, a measurement controller 90, and a light source driver 100 are arranged as the components that connect the light-source device 10 and the light-receptive optical device 50.

The waveform processing circuit 70 performs predetermined waveform processing on the laser beams received by the light-receptive optical device 50 and outputs a detection signal. The timing circuit 80 measures the length of time from the timing at which light is emitted from the light-source device 10 to the timing at which the object is detected by the light-receptive optical device 50, based on the detection signal output from the waveform processing circuit 70, and outputs the result of time measurement. The measurement controller 90 obtains information about an object existing in a predetermined detection field, based on the result of time measurement, which is input from the timing circuit 80, indicating the length of time from the timing at which light is emitted from the light-source device 10 to the timing at which the object is detected by the light-receptive optical device 50 (the length of time from the timing at which light is emitted from the light-source device 10 and the timing at which the object is detected by the light-receptive optical device 50). Moreover, the measurement controller 90 outputs a light-source driving signal based on the information about the detected object. The light source driver 100 controls the light emission of the light-source device 10 based on a light-source driving signal sent from the measurement controller 90.

The length of time between the timing at which pulses of light are emitted from the light-source device 10 and the timing at which the laser beams returned as reflected by an object reaches the light-receptive optical device 50 is measured through the waveform processing circuit 70 and the timing circuit 80, and the obtained value is multiplied by the speed of light. As a result, the distance that the light goes and returns between the object detector 2 and the object is calculated and obtained. The distance between the light-emitting system and the object is almost the same as the distance between the photo-detection system and the object, and thus it can be assumed that the distance between the light-source device 10 and the object is approximately the same as the distance between the object and the light-receptive optical device 50. In view of the above, the obtained go and return distance is divided into two to calculate the distance between the object detector 2 and the object.

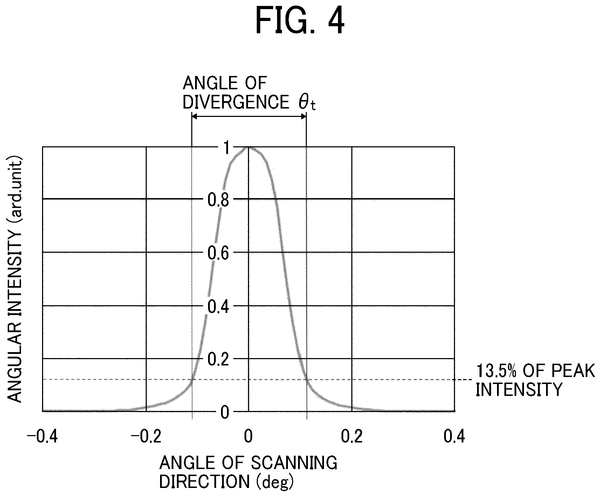

FIG. 4 is a diagram illustrating the angular-intensity distribution of the laser beams emitted from the light-emitting optical device 20 (i.e., the angular-intensity distribution of the laser beams that have been coupled by the light-emitting optical device 20), provided for reference purposes.

In FIG. 4, the angle of divergence $\theta_t$ of laser beams in the detection field is determined by the angle where the intensity becomes $1 / e^2$ of the peak intensity (the angle that the central direction forms with the direction where the intensity becomes $1 / e^2$ of the peak intensity) in the profile of the laser beams. For example, when the intensity of the laser beams is in a Gaussian angular distribution, the angle of divergence $\theta_t$ includes 95% of the entire amount of light (radiation intensity of light) that is output from the light-source device 10. This configuration aims at eliminating most of the loss in the amount of light (radiation intensity of light) as the light is not reflected in an undesired manner by the light-receptive optical device 50. In the example as illustrated in FIG. 4, the angle of divergence $\theta_t$ is 0.16 degrees.

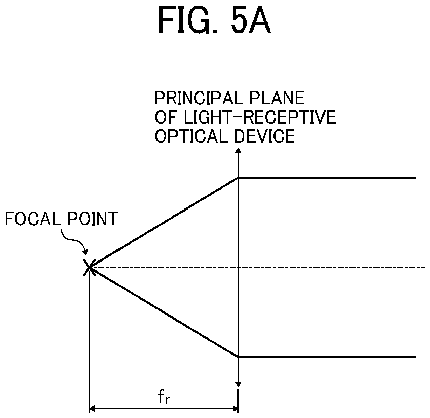

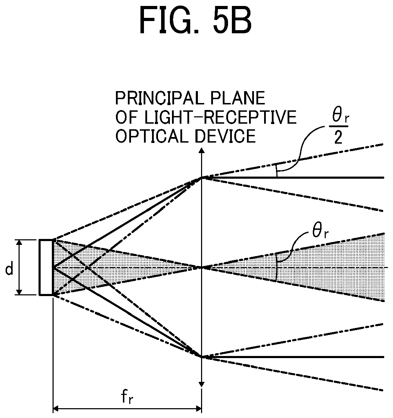

FIG. 5A and FIG. 5B are diagrams each illustrating the light-receptive field angle $\theta_r$ of the light-receptive optical device 50, provided for reference purposes.

$$\theta_r = 2 \tan^{-1} \frac{d}{2f_r}$$

When the light-receptive optical device 50 receives the laser beams that are reflected or scattered by an object, as illustrated in FIG. 5A, the focal point is optimally at a position away from the principal plane of the light-receptive optical device 50 by the focal length $f_r$ of the light-receptive optical device 50. However, the light-receptive optical device 50 in actuality has a dimension on the photo-sensing surface. If the size of the light-receptive optical device 50 in the scanning direction is defined as "d" in view of the influence of the dimension of the light-receptive optical device 50, the light-receptive field angle $\theta_r$ of the light-receptive optical device 50 is expressed in an equation given above. In other words, the equation given above is satisfied, where $\theta_r$ denotes the light-receptive field angle of the light-receptive optical device 50, $f_r$ denotes the focal length of the light-receptive optical device 50, and d denotes the size of the light-receptive optical device 50 in the scanning direction. The light-receptive field angle $\theta_r$ of the light-receptive optical device 50 is defined by the focal length $f_r$ of the light-receptive optical device 50 and the size d of the light-receptive optical device 50 in the scanning direction.

The photo-sensing surface of the light-receptive optical device 50 may be, for example, square-shaped, rectangular-shaped, circular-shaped, or elliptically shaped. When the photo-sensing surface of the light-receptive optical device 50 is square-shaped, the size of the light-receptive optical device 50 in the scanning direction is determined by the length of a side of the square or the half length of such a side of the square. When the photo-sensing surface of the light-receptive optical device 50 is rectangular-shaped, the size of the light-receptive optical device 50 in the scanning direction is determined by the length of a longer side or shorter side of the rectangular or the half length of such a longer side or shorter side of the rectangular. When the photo-sensing surface of the light-receptive optical device 50 is circular-shaped, the size of the light-receptive optical device 50 in the scanning direction is determined by the diameter or radius of the circle. When the photo-sensing surface of the light-receptive optical device 50 is elliptically shaped, the size of the light-receptive optical device 50 in the scanning direction is determined by the length of a major (longer) axis or minor (shorter) axis of the ellipse or the half length of such a major axis or minor axis of the ellipse.

When the length of time it takes for a laser beam to travel both ways at light speed between the object detector 2 and an object is ignorably short in view of the scanning speed of the light deflector 30 and the light-receptive field angle $\theta_r$ of the light-receptive optical device 50 is equal to or wider than the angle of divergence $\theta_t$ of laser beams in the detection field ($\theta_r \geq \theta_t$), no vignetting occurs for the laser beams at the light-receptive optical device 50, and the laser beams that are reflected or scattered by an object can be received by the light-receptive optical device 50 in an efficient manner. As known in the art, the light-receptive field angle tends to be made wider than necessary in order to cover the residual of adjustment or the amount of change. By so doing, optical systems can more easily be adjusted, or an error factor such as the lapse of time can be dealt with in a robust manner.

Although the light travels at the speed of light both ways between the scanner and the object, the advance of the light deflector during such go and return scanning is not ignorable depending on scanning speed of the scanner. For this reason, there are some cases in which the accuracy of the detection deteriorates.

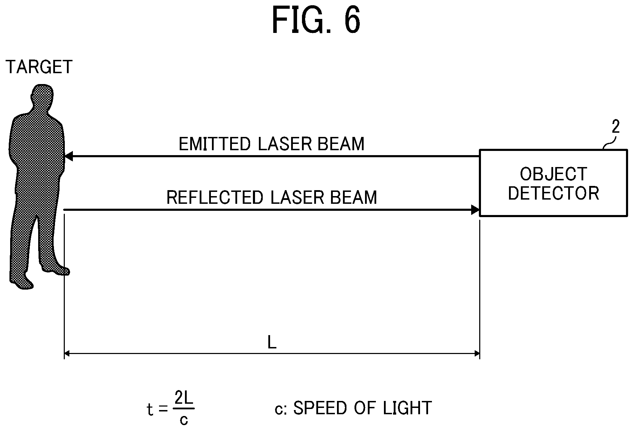

FIG. 6 is a diagram illustrating the longest detection distance L of an object in the detection field, provided for reference purposes.

For example, the length of time t it takes for the emitted light to travel, at the light speed c, both ways between the object detector 2 and the object at the longest detection distance L is defined as follows.

$$t = 2L / c$$

When L=300 meters (m), t = 2μs. When it is assumed that a micro-electromechanical systems (MEMS) mirror is used, the resonance frequency is at 2000 hertz (Hz), and that the amplitude is 25 degrees (mechanical deflection angle is ±25 degrees), the scanning angular speed is maximized at the center of scanning. When t = 2 μs, the angle advances in the scanning direction by 0.6 degrees that corresponds to the deflection angle of the MEMS mirror. Regarding the optical angles of view, the angle advances in the scanning direction by 1.3 degrees that is the doubled amount of the deflection angle of the MEMS mirror. As described above, when the time it takes for the light to be emitted, reflected, and be received is 2 μs, the light is shifted due to the light emission and light reception by 1.3 degrees in the scanning direction. Depending on the setting of each one of the light-emitting field angle and the light-receptive field angle, light reception may fail due to an insufficient angle of field, and the accuracy of object detection may end up deteriorating. In extreme cases, object detection may simply fail.

Alternatively or additionally, when the scanning speed (i.e., the scanning angular speed) of the light deflector 30 is slow, the longest detection distance L of an object in the detection field gets long. For this reason, for example, when laser beams are returned from an area at a long distance, a similar problem may occur. It is recommended that the scanning speed (i.e., the scanning angular speed) of the light deflector 30 be taken in consideration.

For reference, when it is assumed that the light deflector 30 is a polygon mirror with constant-angular-velocity scan characteristics, the length of time t it takes for the light to travel, at light speed c, both ways between the object detector 2 and the object (target) at the longest detection distance L is determined as follows.

$$t = 2L / c$$

$\omega_u$ denotes a constant angular speed, and the angle of the polygon mirror changes during the length of time t by the amount calculated in an equation given below.

$$t \times \omega_u = 2L / c \times \omega$$

Accordingly, once the light emitted from the light-source device 10 travels both ways between the object detector 2 and the object (target) at the longest detection distance L, the angle of the polygon mirror advances by the amount

determined by "t × ω_u = 2 L/ c × ω." In view of the fact that the incident angle of the emitted laser beam and the received laser beam on the polygon mirror changes accordingly and the light is guided to the light-receptive optical device 50 as reflected by the polygon mirror, the angles of the emitted laser beam and the received laser beam are shifted by the amount twice as much as the angle of the polygon mirror in total.

In order to handle such a situation, the light-receptive field angle $\theta_r$ of the light-receptive optical device 50 can be set as follows. In order to secure the angle of divergence $\theta_t$ of laser beams in the detection field and cover the movement caused as the angle of the polygon mirror advances while the laser beam travels both ways between the light deflector 30 and an object, the light-receptive field angle $\theta_r$ of the light-receptive optical device 50 is determined based on the scanning angular speed $\omega_u$ of the light deflector 30, the longest detection distance L of an object in the detection field, and the angle of divergence $\theta_t$ of laser beams in the detection field. More specifically, upon defining the speed of light c, the light-receptive field angle $\theta_r$ of the light-receptive optical device 50 is set so as to satisfy a conditional expression given below.

$$\theta_r \geq \theta_t + \frac{4L}{c}\omega_u$$

Due to this configuration, when the scanning speed (i.e., the scanning angular speed) of the light deflector 30 is slow, the light-receptive field angle $\theta_r$ of the light-receptive optical device 50 can be set such that the laser beams can be received with reliability even when the longest detection distance L of an obj ect in the detection field is long and laser beams are returned from an area at a long distance. More specifically, the above conditional expression is satisfied to cover the movement caused as the angle of the polygon mirror advances while the laser beam travels both ways between the light deflector 30 and an object. Due to such a configuration, the laser beams can be received with reliability regardless of the shifting of the angles of the emitted laser beam and the received laser beam.

There are many cases in which the rotation speed of a polygon mirror is indicated by the number of revolutions (R) per minute. Accordingly, R / 60 indicates the number of revolutions per second. As one rotation is complete by 360 degrees, the rotation speed per unit time, i.e., the rotational angular speed (scanning angular speed) $\omega_u$, is expressed in an equation given below.

$$\omega_u = 360° \times (R / 60) = 60° \times R$$

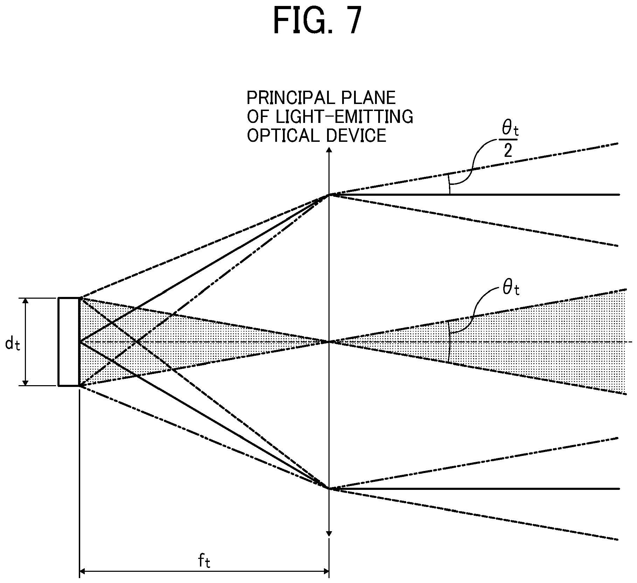

FIG. 7 is a diagram illustrating the angle of divergence $\theta_t$ of laser beams in the detection field, provided for reference purposes.

As illustrated in FIG. 7, assuming that the light-source device 10 is a point source of light and that the optical-path length between the light-emitting point of the light-source device 10 and the principal plane of the light-emitting optical device 20 is the focal length $f_t$ of the light-emitting optical device 20, the laser beams that are emitted from the light-source device 10 and then are formed by the light-emitting optical device 20 are approximately collimated.

By contrast, when a light-source device 10 of higher output power is used in order to detect an object at a longer distance, as known in the art, the light-emitting area of the light-source device 10 is increased to increase the output power. For example, the light-emitting area of the light-source device 10 is determined by the size $d_t$ as illustrated in FIG. 7. In such a configuration, as illustrated in FIG. 7, even when the optical-path length between the light-emitting area of the light-source device 10 and the principal plane of the light-emitting optical device 20 is made to be equivalent to the focal length $f_t$ of the light-emitting optical device 20, the laser beams that are emitted from the light-source device 10 and then are formed by the light-emitting optical device 20 are not collimated due to the influence of the size of the light-emitting area of the light-source device 10.

In FIG. 7, the solid lines indicate the laser beams that are emitted from the center of the light-emitting area of the light-source device 10, and the broken lines indicate the laser beams that are emitted from one end (i.e., the top end in FIG. 7) of the light-emitting area of the light-source device 10. Moreover, the dot-dot-dash line indicates the laser beams that are emitted from the other end (i.e., the bottom end in FIG. 7) of the light-emitting area of the light-source device 10. As illustrated in FIG. 7, the laser beams that are emitted from the center of the light-emitting area of the light-source device 10, as indicated by the solid lines, are approximately collimated by the light-emitting optical device 20. By contrast, the laser beams that are emitted from one end and the other end of the light-emitting area of the light-source device 10 have a component whose light flux diameter diverges after exiting the light-emitting optical device 20. Some components of the laser beams that are emitted from one end (as indicated by broken lines) and the other end (as indicated by dot-dot-dash lines) of the light-emitting area of the light-source device 10 travel in a straight line after passing through the optical axis on the principal plane of the light-emitting optical device 20. As the laser beams are approximately collimated by the coupling of the light-emitting optical device 20, the laser beams that are incident on the ends of the light-emitting optical device 20 exit at an equivalent angle. Due to this configuration, the laser beams diverge at an angle indicated by $\theta$ or $\theta_t$ / 2 in FIG. 7. In view of the above properties and characteristics, as the size $d_t$ of the light-emitting area of the light-source device 10 is larger, the angle of divergence $\theta$ or $\theta_t$ / 2 of the laser beams gets wider and becomes unignorable.

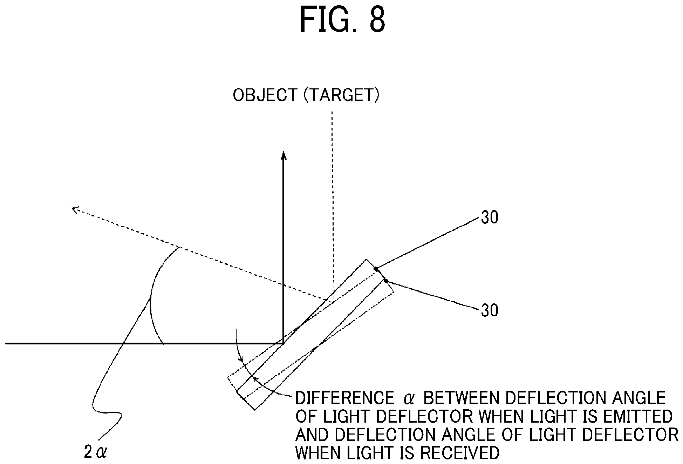

FIG. 8 is a diagram illustrating the angle-of-view difference between the light emission and light reception when the light is deflected by the light deflector 30, provided for reference purposes. In FIG. 8, the light deflector 30 that is at a deflection angle when the light is emitted is drawn by a solid line, and the light deflector 30 that is at a deflection angle when the light is received is drawn by a broken line. In FIG. 8, the track of the emitted laser beam before and after entering the light deflector 30 is drawn by a solid line, and the track of the received laser beam before and after entering the light deflector 30 is drawn by a broken line. The incident angle of the emitted light that travels to an object (target) existing in the detection field is the same as the incident angle of the received light that returns from the object (target) existing in the detection field. In FIG. 8, $\alpha$ denotes the difference between the deflection angle of the light deflector 30 when light is emitted and the deflection angle of the light deflector 30 when light is received. By doubling this difference $\alpha$, the angle-of-view difference $2\alpha$ that is caused by the deflection performed by the light deflector 30 can be obtained.

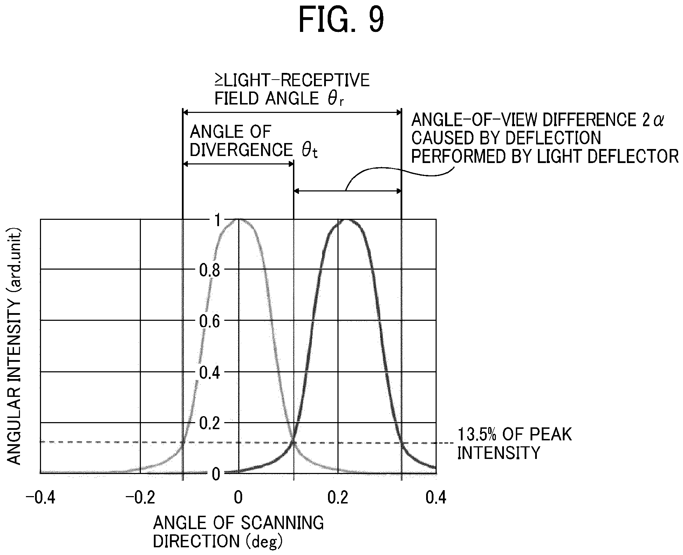

FIG. 9 is a diagram illustrating the relation between the emitted laser beams and the light-receptive field angle $\theta_r$, provided for reference purposes, which corresponds to FIG. 4.

In FIG. 9, in a similar manner to FIG. 4, the angle of divergence $\theta_t$ of laser beams in the detection field is in the center of the angle in the scanning direction. On the right side of the angle of divergence $\theta_t$ of laser beams, the angle-of-view difference $2\alpha$ that is caused by the deflection performed by the light deflector 30 is illustrated. The sum of the angle of divergence $\theta_t$ of laser beams in the detection field and the angle-of-view difference $2\alpha$ that is caused by the deflection performed by the light deflector 30 is configured to be equal to or greater than the light-receptive field angle $\theta_r$ of the light-receptive optical device 50 as in an equation given below.

$$\theta_t + 2\alpha \geq \theta_r$$

In other words, the angle-of-view difference $2\alpha$ that is caused by the deflection performed by the light deflector 30 may be applied to (4L / c) $\times$ $\omega_u$ in the above conditional expression.

In the reference apparatus described above, the light deflector 30 is a polygon mirror with constant-angular-velocity scan characteristics. By contrast, in the first embodiment of the present disclosure, it is assumed that the light deflector 30 is a micro-electromechanical system (MEMS) mirror with sinusoidal angular-speed scan characteristics.

When the light deflector 30 is a MEMS mirror, the scanning cycle (scanning angular speed) changes in a sinusoidal manner. For this reason, the changes in angle $\delta\theta$ during a certain length of time t are inconstant, and the changes in angle $\delta\theta$ over a desired length of time t' can be expressed in an equation given below. In the below equation, $\omega_{sin}$, L, and c denote the scanning angular speed of the light deflector 30, the longest detection distance of an object (target) in the detection field, and the speed of light, respectively.

$$\delta\theta = \left| \left( \arcsin\left( t' + \frac{2L}{c} \right) \omega_{sin} \right) - \left( \arcsin t' \omega_{sin} \right) \right|$$

In the present embodiment, the scanning speed of the MEMS mirror is maximized at the center of scanning. For this reason, if the range where the angle becomes zero is cut out, the changes in angle $\delta\theta$ over the certain length of time "t = 2L/c" is maximized in the range between -t / 2 and t / 2. Accordingly, the changes in angle $\delta\theta$ can be expressed in an equation given below.

$$\delta\theta = \left| \left( \arcsin\left( \frac{L}{c} \omega_{sin} \right) \right) - \left( \arcsin\left( -\frac{L}{c} \omega_{sin} \right) \right) \right| = 2\arcsin\left( \frac{L}{c} \omega_{sin} \right)$$

In view of the displacements in the optical angles of view of the light deflector (MEMS mirror) 30, the displacements in the light-emitting field angle and light-receptive field angle are equivalent to the doubled amount of the above changes in angle δθ. Accordingly, the light-receptive field angle $\theta_r$ of the light-receptive optical device 50 is set so as to satisfy a conditional expression given below, where $\theta_r$ denotes the light-receptive field angle of the light-receptive optical device 50, $\omega_{sin}$ denotes the scanning angular speed of the light deflector 30, L denotes the longest detection distance of an object in the detection field, $\theta_t$ denotes the angle of divergence of laser beams in the detection field, and c denotes the speed of light.

$$\theta_r \geq \theta_t + 4\arcsin\frac{L}{c}\omega_{sin}$$

Due to this configuration, when the scanning speed (i.e., the scanning angular speed) of the light deflector 30 is slow, the light-receptive field angle $\theta_r$ of the light-receptive optical device 50 can be set such that the laser beams can be received with reliability even when the longest detection distance L of an object in the detection field is long and laser beams are returned from an area at a long distance. More specifically, the above conditional expression is satisfied to cover the movement caused as the angle of the MEMS mirror advances while the laser beam travels both ways between the light deflector 30 and an object. Due to such a configuration, the laser beams can be received with reliability regardless of the shifting of the angles of the emitted laser beam and the received laser beam.

The MEMS mirror can perform two-way scanning between the MEMS mirror and the object. However, when the MEMS mirror is configured to perform object detection in both the first half and second half of the go and return scanning, the direction in which the angle of the MEMS mirror unintentionally advances between the instant when the light is emitted and the instant when the light is received is inverse between the first half and second half of the go and return scanning. The light-receptive field angle $\theta_r$ of the light-receptive optical device 50 may be set so as to satisfy a conditional expression given below such that the light-receptive optical device 50 can receive the light with reliability even in such cases.

$$\theta_r \geq \theta_t + 8\arcsin\frac{L}{c}\omega_{sin}$$

Second Embodiment

In the second embodiment of the present disclosure, the first and second directions are defined that are orthogonal to each other on the plane orthogonal to the direction of travel of the central light beam of the laser beams that are emitted from the light-source device 10 and the light-emitting optical device 20 (light source unit). For example, the directions on the ZX plane including the Z-axis direction and the X-axis direction are referred to as the first direction and the directions on the XY plane including the X-axis direction and the Y-axis direction may be referred to as the second direction. The size of the light-emitting area of the light-source device 10 or the divergence angle of the laser beams varies between the first direction (ZX plane) and the second direction (XY plane), and a cylindrical lens with different focal length, which corresponds to the first and second directions, may be used for the light-emitting optical device 20.

In the second embodiment of the present disclosure, the light deflector 30 scans the laser beams emitted from the light-source device 10 and the light-emitting optical device 20 (light source unit) on the plane orthogonal to the direction of travel of the central light beam of the laser beams, in the first direction. Further, at least one of the light-emitting optical device 20 and the light-receptive optical device 50 is not arc-shaped in the first direction (for example, on the ZX plane).

In the second embodiment of the present disclosure, a coaxial aspherical lens is used for the light-emitting optical device 20. Due to such a configuration, the divergence of the emitted laser beams due to the aberration can be prevented. Once the emitted laser beam diverges, the utilization efficiency of light may deteriorate unless the light-receptive field angle of the light-receptive optical device 50 is widened such that the emitted laser beams can form an image on the light-receptive optical device 50 without being reflected in an undesired manner, by increasing the size of the photo-sensing surface of the light-receptive optical device 50 or extending the focal length f of the light-receptive optical device 50. Moreover, once the emitted laser beam diverges, the amount of the received light of the emitted laser beam is decreased, and there are some cases in which the detection distance cannot be secured or the detection stability may deteriorate. Further, if the light-receptive field angle of the light-receptive optical device 50 is widened, the amount of extraneous light that has nothing to do with the signal light but is taken in also increases accordingly. For this reason, it is desired that the angle of divergence of the emitted laser beam be controlled to a desired angle as much as possible and the light-receptive field angle be minimized. The light-receptive field angle can be minimized by making the shape of the light-receptive optical device 50 aspherical. For reference, when a polygon mirror is used as the light deflector 30 as described above, it is highly effective if the light-receptive field angle in the scanning direction is widened such that the light can be received with reliability even when the angle of the light emission and light reception is shifted due to the scanning angular speed of the polygon mirror. In particular, it is highly effective if the polygon mirror is in an aspherical shape in the scanning direction.

In the configurations according to the above embodiments of the present disclosure, a single coaxial aspherical lens is used to perform both light emission and light reception. However, no limitation is intended thereby. Alternatively or additionally, for example, the focal length of the projection optical system and the receiving optical system may be differentiated from each other between the scanning direction (i.e., the Z-direction as illustrated in FIG. 1) immediately after the light-source device 10 (laser diode (LD) or avalanche photodiode (APD)) and the non-scanning direction (i.e., the Y-direction as illustrated in FIG. 1) orthogonal to the scanning direction and the direction of travel of the emitted light and the received light (i.e., the X-direction as illustrated in FIG. 1). Moreover, various kinds of modification may be made as follows. For example, the emitted light may be coupled and the image of the received light may be formed using a pair of a cylindrical lens that has an optical power in the scanning direction and a cylindrical lens that has an optical power in the directions other than the scanning direction, and a cylindrical lens that is not arc-shaped may be used, at least, for the scanning direction.

Third Embodiment

In the third embodiment of the present disclosure, in a similar manner to the second embodiment as above, the first and second directions are defined that are orthogonal to each other on the plane orthogonal to the direction of travel of the central light beam of the laser beams that are emitted from the light-source device 10 and the light-emitting optical device 20 (light source unit). For example, the directions on the ZX plane including the Z-axis direction and the X-axis direction are referred to as the first direction and the directions on the XY plane including the X-axis direction and the Y-axis direction may be referred to as the second direction.

In the third embodiment of the present disclosure, the light deflector 30 scans the laser beams emitted from the light-emitting optical device 20 on the plane orthogonal to the direction of travel of the central light beam of the laser beams, in the second direction that is orthogonal to the first direction. Moreover, in the third embodiment of the present disclosure, the scanning angular speed of the light deflector 30 in the first direction is different from the scanning angular speed of the light deflector 30 in the second direction. Further, at least one of the light-emitting optical device 20 and the light-receptive optical device 50 is not arc-shaped in one of the first and second directions where the scanning angular speed of the light deflector 30 is fast (for example, on the ZX plane).

When the light deflector 30 (for example, a MEMS mirror) is configured to perform biaxial scanning in the first and second directions, the light deflector 30 is made to have a non-arc shape at least in the direction where the scanning angular speed of the light deflector 30 is fast, i.e., in the direction where a wide light-receptive field angle is desired. Due to such a configuration, the aberration is corrected, and the light-receptive field angle be minimized. Moreover, the noise due to the incident extraneous light when the light-receptive field angle gets wider can be reduced, and the performance of distance measuring can be improved.

Fourth Embodiment

In the fourth embodiment of the present disclosure, it is assumed that object detection is performed only in a single scanning direction of the light deflector 30 (for example, one of the first direction (ZX plane) and the second direction (XY plane)). Such a scanning may be referred to as a uniaxial one-side scanning. In such a configuration, the laser beams that are reflected or scattered by an object at the longest detection distance L are within the light-receptive field angle of the light-receptive optical device 50, and the optical scanner 1 can be designed such that at least some of the laser beams that are reflected or scattered by an object at a distance shorter than the longest detection distance L goes outside the light-receptive field angle of the light-receptive optical device 50.

In the fourth embodiment of the present disclosure, as a method of limiting the light-receptive field angle of the light-receptive optical device 50, the angle of view of the laser beams that are reflected or scattered by an object at a long distance is included in a desired angle of view on a priority basis and the divergence of some of the laser beams that are reflected or scattered by an object at a short distance is narrowed to a level outside the light-receptive field angle, in place of or in addition to the above configuration where the light-receptive field angle is widened based on the conditional expression. As a large amount of light (light with high intensity) returns from an object at a short distance, the amount of the received light sufficient to detect an object can be secured with the remaining laser beams even if the axis is shifted due to the light emission and light reception and some of the light goes outside the light-receptive field angle. Accordingly, the amount of incident extraneous light can be reduced and an object at a long distance can be detected without widening the light-receptive field angle of the light-receptive optical device 50.

Fifth Embodiment

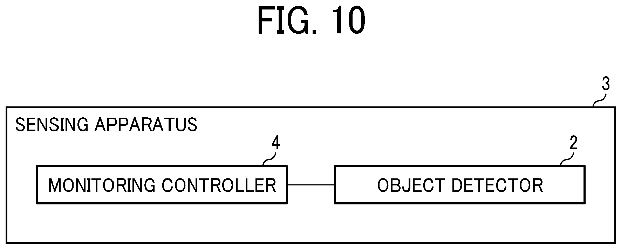

FIG. 10 is a diagram illustrating a configuration of a sensing apparatus 3 according to a fifth embodiment of the present disclosure.

The sensing apparatus 3 includes the object detector 2 as described above and a monitoring controller 4. The object detector 2 and the monitoring controller 4 are electrically connected to each other.

For example, the sensing apparatus 3 is mounted near a bumper or a rear-view mirror of the vehicle. In FIG. 10, it is illustrated as if the monitoring controller 4 is provided inside the sensing apparatus 3. However, no limitation is indicated thereby, and the monitoring controller 4 may separately be provided for a vehicle, in addition to the sensing apparatus 3.

The monitoring controller 4 obtains information about an object including at least one of the presence or absence of the object, the moving direction of the object, and the speed of the object, based on the data output from the object detector 2. Moreover, the monitoring controller 4 performs processes such as the estimation or determination of the size or shape of an object, the calculation of the position and the movement information of the object, and the recognition of the type of object, based on the data output from the object detector 2. Then, the monitoring controller 4 controls the driving operation of the vehicle based on at least one of the position information and movement information of the object. For example, when it is determined that there is an obstacle ahead of the vehicle, automatic braking is executed using automatic driving technologies. Moreover, a warning may be given, or instructions to turn the steering wheel or instructions to step on brakes may be given.

In the optical scanner, the object detector, and the sensing apparatus according to the embodiments of the present disclosure, as described above, the light-receptive field angle of the light-receptive optical device is determined based on the scanning angular speed of the light deflector, the longest detection distance of an object in the detection field, and the angle of divergence of laser beams in the detection field. Due to such a configuration, the light reflected by an object can be received with reliability regardless of the scanning speed of the light deflector or the distance to the object, and the object can be detected with a high degree of precision.

**Claims**

1. An optical scanner (1) comprising:

   a light source unit (10, 20) configured to emit a laser beam;
   a light deflector (30) configured to deflect and scan the laser beam emitted from the light source unit (10, 20) towards an object existing in a detection field; and
   a light-receptive optical device (50) configured to receive the laser beam deflected and scanned by the light deflector (30) and then reflected or scattered by the object existing in the detection field,
   wherein a light-receptive field angle ($\theta_r$) of the light-receptive optical device (50) is determined based on a scanning angular speed of the light deflector (30), a longest detection distance (L) of the object in the detection field, and an angle of divergence ($\theta_t$) of the laser beam in the detection field,
   **characterized by** the light deflector (30) having sinusoidal angular-speed scan characteristics, and
   wherein a conditional expression

$$\theta_r \geq \theta_t + 4\arcsin\frac{L}{c}\,\omega_{\sin}$$

   is satisfied,
   where

$\theta_r$ denotes the light-receptive field angle of the light-receptive optical device (50),
$\omega_{sin}$ denotes the scanning angular speed of the light deflector (30),
L denotes the longest detection distance of the object in the detection field,
$\theta_t$ denotes the angle of divergence of the laser beam in the detection field, and
c denotes speed of light.

2. The optical scanner (1) according to claim 1,
wherein an equation

$$\theta_r = 2 \tan^{-1} \frac{d}{2f_r}$$

is satisfied,
where

$\theta_r$ denotes the light-receptive field angle of the light-receptive optical device (50),
$f_r$ denotes a focal length of the light-receptive optical device (50), and
d denotes a size of the light-receptive optical device (50) in a scanning direction.

3. The optical scanner (1) according to any one of claims 1 to 2,

wherein the light source unit (10, 20) includes a light-source device (10) configured to emit the laser beam, and a light-emitting optical device (20) configured to form the laser beam emitted from the light-source device (10),
wherein the light deflector (30) is configured to scan the laser beam emitted through the light-emitting optical device (20) in a first direction (ZX) on a plane orthogonal to a direction of travel of a central light beam of the laser beam, and
wherein at least one of the light-emitting optical device (20) and the light-receptive optical device (50) is not arc-shaped in the first direction (ZX).

4. The optical scanner (1) according to claim 3,

wherein the light deflector (30) is configured to scan the laser beam emitted through the light-emitting optical device (20) in a second direction (XY) orthogonal to the first direction (ZX) on the plane orthogonal to the direction of travel of the central light beam of the laser beam,
wherein a scanning angular speed of the light deflector (30) in the first direction (ZX) is different from a scanning angular speed of the light deflector (30) in the second direction (XY), and
wherein at least one of the light-emitting optical device (20) and the light-receptive optical device (50) is not arc-shaped in one of the first direction (ZX) and the second direction (XY), and the scanning angular speed of the light deflector (30) is faster in the one of the first direction (ZX) and the second direction (XY) than in another one of the first direction (ZX) and the second direction (XY).

5. The optical scanner (1) according to any one of claims 1 to 4,

wherein the laser beam reflected or scattered by the object at the longest detection distance (L) is within the light-receptive field angle ($\theta_r$) of the light-receptive optical device (50), and
wherein at least some of the laser beam reflected or scattered by the object at a distance shorter than the longest detection distance (L) is outside the light-receptive field angle ($\theta_r$) of the light-receptive optical device (50).

6. The optical scanner (1) according to claim 1,

wherein the light deflector (30) has sinusoidal angular-speed scan characteristics, and is configured to perform two-way scanning between the light deflector (30) and the object, and
wherein a conditional expression

$$\theta_r \geq \theta_t + 8\arcsin\frac{L}{c}\omega_{\sin}$$

is satisfied,
where

$\theta_r$ denotes the light-receptive field angle of the light-receptive optical device (50),
$\omega_{\sin}$ denotes the scanning angular speed of the light deflector (30),
L denotes the longest detection distance of the object in the detection field,
$\theta_t$ denotes the angle of divergence of the laser beam in the detection field, and
c denotes speed of light.

7. An object detector (2) comprising:

the optical scanner (1) according to any one of claims 1 to 6; and
an object detection device (50) configured to detect the laser beam reflected or scattered by the object existing in the detection field to determine a timing at which the object is to be detected,
wherein information about the object is obtained based on a timing at which light is emitted by the light source unit (10, 20) and the timing at which the object is to be detected.

8. A sensing apparatus (3) comprising:

the object detector (2) according to claim 7; and
a monitoring controller (4) configured to obtain information about the object including at least one of presence or absence of the object, a moving direction of the object, and speed of the object, based on an output from the object detector (2).

9. The sensing apparatus (3) according to claim 8,

wherein the sensing apparatus (3) is configured to be mounted in a vehicle, and
wherein the monitoring controller (4) is configured to control a driving operation of the vehicle based on at least one of position information and movement information of the object.

**Patentansprüche**

1. Optischer Scanner (1), umfassend

eine Lichtquelleneinheit (10, 20), die dazu konfiguriert ist, einen Laserstrahl zu emittieren;
einen Lichtdeflektor (30), der dazu konfiguriert ist, den von der Lichtquelleneinheit (10, 20) emittierten Laserstrahl in Richtung eines in einem Erkennungsfeld vorhandenen Objekts abzulenken und abzutasten; und
eine lichtempfangende optische Vorrichtung (50), die dazu konfiguriert ist, den von dem Lichtdeflektor (30) abgelenkten und abgetasteten und dann von dem in dem Erkennungsfeld vorhandenen Objekt reflektierten oder gestreuten Lichtstrahl zu empfangen,
wobei ein lichtempfangender Feldwinkel ($\theta_r$) der lichtempfangenden optischen Vorrichtung (50) auf Grundlage einer Abtastwinkelgeschwindigkeit des Lichtdeflektors (30), einer längsten Erkennungsentfernung (L) des Objekts in dem Erkennungsfeld und eines Divergenzwinkels ($\theta_t$) des Laserstrahls in dem Erkennungsfeld bestimmt wird,
**dadurch gekennzeichnet, dass** der Lichtdeflektor (30) sinusförmige Winkelgeschwindigkeitsabtasteigenschaften aufweist, und
wobei ein bedingter Ausdruck

$$\theta_r \geq \theta_t + 4\arcsin\frac{L}{c}\,\omega_{\sin}$$

erfüllt wird,
wobei

$\theta_r$ den lichtempfangenden Feldwinkel der lichtempfangenden optischen Vorrichtung (50) angibt,
$\omega_{\sin}$ die Abtastwinkelgeschwindigkeit des Lichtdeflektors (30) angibt,
L die längste Erkennungsentfernung des Objekts in dem Erkennungsfeld angibt,
$\theta_t$ den Divergenzwinkel des Laserstrahls in dem Erkennungsfeld angibt, und
c die Lichtgeschwindigkeit angibt.

2.  Optischer Scanner (1) nach Anspruch 1,
wobei die Gleichung

$$\theta_r = 2\tan^{-1}\frac{d}{2f_r}$$

erfüllt ist,
wobei

$\theta_r$ den lichtempfangenden Feldwinkel der lichtempfangenden optischen Vorrichtung (50) angibt,
$f_r$ eine Brennweite der lichtempfangenden optischen Vorrichtung (50) angibt, und
d eine Größe der lichtempfangenden optischen Vorrichtung (50) in einer Abtastrichtung angibt.

3.  Optischer Scanner (1) nach einem der Ansprüche 1 bis 2,

wobei die Lichtquelleneinheit (10, 20) eine Lichtquellenvorrichtung (10), die dazu konfiguriert ist, den Laserstrahl zu emittieren, und eine lichtemittierende optische Vorrichtung (20) beinhaltet, die dazu konfiguriert ist, den von der Lichtquellenvorrichtung (10) emittierten Laserstrahl auszubilden,
wobei der Lichtdeflektor (30) dazu konfiguriert ist, den durch die lichtemittierende optische Vorrichtung (20) emittierten Laserstrahl in einer ersten Richtung (ZX) in einer Ebene orthogonal zu einer Bewegungsrichtung eines zentralen Lichtstrahls des Laserstrahls abzutasten, und
wobei wenigstens eine der lichtemittierenden optischen Vorrichtung (20) und der lichtempfangenden optischen Vorrichtung (50) in der ersten Richtung (ZX) nicht bogenförmig ist.

4.  Optische Scanner (1) nach Anspruch 3,

wobei der Lichtdeflektor (30) dazu konfiguriert ist, den durch die lichtemittierende optische Vorrichtung (20) emittierten Laserstrahl in einer zweiten Richtung (XY) orthogonal zu der ersten Richtung (ZX) auf der Ebene orthogonal zu der Bewegungsrichtung des zentralen Lichtstrahls des Laserstrahls abzutasten,
wobei eine Abtastwinkelgeschwindigkeit des Lichtdeflektors (30) in der ersten Richtung (ZX) von einer Abtastwinkelgeschwindigkeit des Lichtdeflektors (30) in der zweiten Richtung (XY) verschieden ist, und
wobei wenigstens eine der lichtemittierenden optischen Vorrichtung (20) und der lichtempfangenden optischen Vorrichtung (50) in einer der ersten Richtung (ZX) und der zweiten Richtung (XY) nicht bogenförmig ist, und die Abtastwinkelgeschwindigkeit des Lichtdeflektors (30) in der einen der ersten Richtung (ZX) und der zweiten Richtung (XY) schneller ist als in einer anderen der ersten Richtung (ZX) und der zweiten Richtung (XY).

5.  Optischer Scanner (1) nach einem der Ansprüche 1 bis 4,

wobei der von dem Objekt reflektierte oder gestreute Laserstrahl in der längsten Erkennungsentfernung (L) innerhalb des lichtempfangenden Feldwinkels ($\theta_r$) der lichtempfangenden optischen Vorrichtung (50) liegt, und wobei wenigstens ein Teil des Laserstrahls, der von dem Objekt in einer kürzeren Entfernung als die längste Erkennungsentfernung (L) reflektiert oder gestreut wird, außerhalb des lichtempfangenden Feldwinkels ($\theta_r$) der lichtempfangenden optischen Vorrichtung (50) liegt.

6. Optische Scanner (1) nach Anspruch 1,

wobei der Lichtdeflektor (30) sinusförmige Winkelgeschwindigkeitsabtasteigenschaften aufweist und dazu konfiguriert ist, eine Zwei-Wege-Abtastung zwischen dem Lichtdeflektor (30) und dem Objekt durchzuführen, und wobei ein bedingter Ausdruck

$$\theta_r \geq \theta_t + 8 \arcsin\frac{L}{c}\omega_{\sin}$$

erfüllt wird,
wobei

$\theta_r$ den lichtempfangenden Feldwinkel der lichtempfangenden optischen Vorrichtung (50) angibt,
$\omega_{\sin}$ die Abtastwinkelgeschwindigkeit des Lichtdeflektors (30) angibt,
L die längste Erkennungsentfernung des Objekts in dem Erkennungsfeld angibt,
$\theta_t$ den Divergenzwinkel des Laserstrahls in dem Erkennungsfeld angibt, und
c die Lichtgeschwindigkeit angibt.

7. Objektdetektor (2), umfassend:

den optischen Scanner (1) nach einem der Ansprüche 1 bis 6; und
eine Objektserkennungsvorrichtung (50), die dazu konfiguriert ist, den von dem in dem Erfassungsfeld vorhandenen Objekt reflektierten oder gestreuten Laserstrahl zu erkennen, um einen Zeitpunkt zu bestimmen, zu dem das Objekt erkannt werden soll,
wobei Informationen über das Objekt auf Grundlage eines Zeitpunkts, zu dem Licht von der Lichtquelleneinheit (10, 20) emittiert wird, und des Zeitpunkts, zu dem das Objekt erkannt werden soll, erhalten werden.

8. Erfassungseinrichtung (3), umfassend:

den Objektdetektor (2) nach Anspruch 7; und
eine Überwachungssteuervorrichtung (4), die dazu konfiguriert ist, auf Grundlage einer Ausgabe des Objektdetektors (2) Informationen über das Objekt zu erhalten, die wenigstens eines/eine des Vorhandenseins oder des Nichtvorhandenseins des Objekts, einer Bewegungsrichtung des Objekts und der Geschwindigkeit des Objekts beinhalten.

9. Erfassungseinrichtung (3) nach Anspruch 8,

wobei die Erfassungseinrichtung (3) dazu konfiguriert ist, in einem Fahrzeug montiert zu werden, und
wobei die Überwachungssteuereinrichtung (4) dazu konfiguriert ist, einen Fahrbetrieb des Fahrzeugs auf Grundlage von wenigstens einer von Positionsinformationen und Bewegungsinformationen des Objekts zu steuern.

**Revendications**

1. Scanner optique (1) comprenant :

une unité de source de lumière (10, 20) configurée pour émettre un faisceau laser ;
un déflecteur de lumière (30) configuré pour dévier et balayer le faisceau laser émis depuis l'unité de source de lumière (10, 20) vers un objet existant dans un champ de détection ; et
un dispositif optique de réception de la lumière (50) configuré pour recevoir le faisceau laser dévié et balayé par le déflecteur de lumière (30) puis réfléchi ou diffusé par l'objet existant dans le champ de détection, dans lequel un angle de champ de réception de la lumière ($\theta_r$) du dispositif optique de réception de la lumière (50) est déterminé sur la base d'une vitesse angulaire de balayage du déflecteur de lumière (30), d'une distance de détection la plus longue (L) de l'objet dans le champ de détection et d'un angle de divergence ($\theta_t$) du faisceau laser dans le champ de détection,

**caractérisé par** le déflecteur de lumière (30) ayant des caractéristiques de balayage à vitesse angulaire sinusoïdale, et

dans lequel une expression conditionnelle

$$\theta_r \geq \theta_t + 4\arcsin\frac{L}{c}\omega_{sin}$$

est satisfaite,

où

$\theta_r$ désigne l'angle de champ de réception de la lumière du dispositif optique de réception de la lumière (50),
$\omega_{sin}$ désigne la vitesse angulaire de balayage du déflecteur de lumière (30),
L désigne la distance de détection la plus longue de l'objet dans le champ de détection,
$\theta_t$ désigne l'angle de divergence du faisceau laser dans le champ de détection, et
c désigne la vitesse de la lumière.

2. Scanner optique (1) selon la revendication 1,
dans lequel une équation

$$\theta_r = 2\tan^{-1}\frac{d}{2f_r}$$

est satisfaite,
où

$\theta_r$ désigne l'angle de champ de réception de la lumière du dispositif optique de réception de la lumière (50),
fr désigne une distance focale du dispositif optique de réception de la lumière (50), et
d désigne une taille du dispositif optique de réception de la lumière (50) dans une direction de balayage.

3. Scanner optique (1) selon l'une quelconque des revendications 1 à 2,

dans lequel l'unité de source de lumière (10, 20) comprend un dispositif de source de lumière (10) configuré pour émettre le faisceau laser, et un dispositif optique émetteur de lumière (20) configuré pour former le faisceau laser émis par le dispositif de source de lumière (10),
dans lequel le déflecteur de lumière (30) est configuré pour balayer le faisceau laser émis à travers le dispositif optique émetteur de lumière (20) dans une première direction (ZX) sur un plan orthogonal à une direction de déplacement d'un faisceau de lumière central du faisceau laser, et
dans lequel au moins l'un parmi le dispositif optique émetteur de lumière (20) et le dispositif optique de réception de la lumière (50) n'est pas en forme d'arc dans la première direction (ZX).

4. Scanner optique (1) selon la revendication 3,

dans lequel le déflecteur de lumière (30) est configuré pour balayer le faisceau laser émis à travers le dispositif optique émetteur de lumière (20) dans une deuxième direction (XY) orthogonale à la première direction (ZX) sur le plan orthogonal à la direction de déplacement du faisceau de lumière central du faisceau laser,
dans lequel une vitesse angulaire de balayage du déflecteur de lumière (30) dans la première direction (ZX) est différente d'une vitesse angulaire de balayage du déflecteur de lumière (30) dans la deuxième direction (XY), et
dans lequel au moins l'un du dispositif optique émetteur de lumière (20) et du dispositif optique de réception de la lumière (50) n'est pas en forme d'arc dans l'une de la première direction (ZX) et de la deuxième direction (XY), et la vitesse angulaire de balayage du déflecteur de lumière (30) est plus rapide dans l'une de la première direction (ZX) et de la deuxième direction (XY) que dans une autre de la première direction (ZX) et de la deuxième direction (XY).

5. Scanner optique (1) selon l'une quelconque des revendications 1 à 4,

   dans lequel le faisceau laser réfléchi ou diffusé par l'objet à la distance de détection la plus longue (L) se situe dans l'angle de champ de réception de la lumière ($\theta_r$) du dispositif optique de réception de la lumière (50), et dans lequel au moins une partie du faisceau laser réfléchi ou diffusé par l'objet à une distance plus courte que la distance de détection la plus longue (L) est à l'extérieur de l'angle de champ de réception de la lumière ($\theta_r$) du dispositif optique de réception de la lumière (50).

6. Scanner optique (1) selon la revendication 1,

   dans lequel le déflecteur de lumière (30) a des caractéristiques de balayage à vitesse angulaire sinusoïdale, et est configuré pour effectuer un balayage bidirectionnel entre le déflecteur de lumière (30) et l'objet, et dans lequel une expression conditionnelle

$$\theta_r \geq \theta_t + 8 \arcsin \frac{L}{c} \omega_{\sin}$$

   est satisfaite,
   où

   $\theta_r$ désigne l'angle de champ de réception de la lumière du dispositif optique de réception de la lumière (50),
   $\omega_{\sin}$ désigne la vitesse angulaire de balayage du déflecteur de lumière (30),
   L désigne la distance de détection la plus longue de l'objet dans le champ de détection,
   $\theta_t$ désigne l'angle de divergence du faisceau laser dans le champ de détection, et
   c désigne la vitesse de la lumière.

7. Détecteur d'objet (2) comprenant :

   le scanner optique (1) selon l'une quelconque des revendications 1 à 6 ; et
   un dispositif de détection d'objet (50) configuré pour détecter le faisceau laser réfléchi ou diffusé par l'objet existant dans le champ de détection pour déterminer un instant auquel l'objet doit être détecté,
   dans lequel des informations concernant l'objet sont obtenues sur la base d'un instant auquel la lumière est émise par l'unité de source de lumière (10, 20) et l'instant auquel l'objet doit être détecté.

8. Appareil de détection (3) comprenant :

   le détecteur d'objet (2) selon la revendication 7 ; et
   un contrôleur de surveillance (4) configuré pour obtenir des informations sur l'objet comprenant au moins une parmi la présence ou l'absence de l'objet, une direction de déplacement de l'objet et la vitesse de l'objet, sur la base d'une sortie du détecteur d'objet (2).

9. Appareil de détection (3) selon la revendication 8,

   dans lequel l'appareil de détection (3) est configuré pour être monté dans un véhicule, et
   dans lequel le contrôleur de surveillance (4) est configuré pour contrôler une opération de conduite du véhicule sur la base d'au moins au moins l'une parmi les informations de position et les informations de déplacement de l'objet.

# FIG. 1

SCANNING
RANGE

1

20

10

31

30

Z

Y X

# FIG. 2

# FIG. 3

2

OBJECT DETECTOR

EMITTED LASER BEAM ← **20** LIGHT-EMITTING OPTICAL DEVICE ← **10** LIGHT SOURCE UNIT ← **100** LIGHT SOURCE DRIVER ← LIGHT-SOURCE DRIVING SIGNAL ← **90** MEASURE-MENT CONTROLLER

REFLECTED LASER BEAM → **40** LIGHT-RECEPTIVE OPTICAL SYSTEM → **50** LIGHT-RECEPTIVE OPTICAL DEVICE → **70** WAVEFORM PROCESSING CIRCUIT → DETECTION SIGNAL → **80** TIMING CIRCUIT → RESULT OF TIME MEASUREMENT →

EP 3 761 056 B1

# FIG. 4

# FIG. 5A

PRINCIPAL PLANE
OF LIGHT-RECEPTIVE
OPTICAL DEVICE

FOCAL POINT

$f_r$

# FIG. 5B

# FIG. 6

TARGET

EMITTED LASER BEAM

REFLECTED LASER BEAM

2

OBJECT
DETECTOR

L

$$t = \frac{2L}{c}$$    c: SPEED OF LIGHT

# FIG. 7

PRINCIPAL PLANE
OF LIGHT-EMITTING
OPTICAL DEVICE

$\frac{\theta_t}{2}$

$\theta_t$

$d_t$

$f_t$

# FIG. 8

OBJECT (TARGET)

30

30

DIFFERENCE $\alpha$ BETWEEN DEFLECTION ANGLE
OF LIGHT DEFLECTOR WHEN LIGHT IS EMITTED
AND DEFLECTION ANGLE OF LIGHT DEFLECTOR
WHEN LIGHT IS RECEIVED

$2\alpha$

# FIG. 9

# FIG. 10

**EP 3 761 056 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018151278 A
- JP 2015212647 A
- JP 2011089874 A
- US 2009123158 A

**Non-patent literature cited in the description**

- **SU et al.** Optical receiving solution for optical scanning lag effect of LADAR. *Optik,* 2003, vol. 114 (5), 217-220